(19) Europäisches Patentamt
European Patent Office
Office européen des brevets

(11) **EP 4 393 634 A1**

(12) **EUROPEAN PATENT APPLICATION**
published in accordance with Art. 153(4) EPC

(43) Date of publication:
**03.07.2024 Bulletin 2024/27**

(21) Application number: **22876492.4**

(22) Date of filing: **29.09.2022**

(51) International Patent Classification (IPC):
**B23K 35/26** (2006.01)    **B23K 35/22** (2006.01)
**C22C 13/00** (2006.01)

(52) Cooperative Patent Classification (CPC):
**B23K 35/22; B23K 35/26; C22C 13/00**

(86) International application number:
**PCT/JP2022/036552**

(87) International publication number:
**WO 2023/054629 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021161531**

(71) Applicant: Senju Metal Industry Co., Ltd.
**Tokyo 120-8555 (JP)**

(72) Inventors:
• YOKOYAMA, Takahiro
  Tokyo 120-8555 (JP)
• SAITO, Takashi
  Tokyo 120-8555 (JP)
• YOSHIKAWA, Shunsaku
  Tokyo 120-8555 (JP)
• SUGISAWA, Kota
  Tokyo 120-8555 (JP)

(74) Representative: Grünecker Patent- und
Rechtsanwälte
PartG mbB
Leopoldstraße 4
80802 München (DE)

(54) **SOLDER ALLOY, SOLDER BALL, SOLDER PREFORM, SOLDER PASTE, AND SOLDER JOINT**

(57)    Provided are: a solder alloy having excellent wettability and high reliability by suppressing breakage of a solder joint; and a solder joint. The solder alloy has an alloy composition comprising, by mass%, 1.0-3.7% of Ag, 0.4-0.8% of Cu, 0.50-2.90% of Sb, 5.00-10.00% of In, and 0.01-0.06% of Ni, with the balance being Sn.

Fig. 1A

EP 4 393 634 A1

**Description**

Technical Field

The present invention relates to a solder alloy, a solder ball, a solder preform, a solder paste, and a solder joint to be used for various electronic equipment.

Background Art

In recent years, the performance of electronic components mounted on substrates has dramatically improved due to the higher functionality of commercial-off-the-shelf electronic equipment such as personal computers. The higher the performance of electronic equipment, the larger the current supplied to the electronic components is, and therefore, solder joints used on a substrate of commercial-off-the-shelf electronic equipment are exposed to high temperatures in some cases. When the substrate and the electronic components are joined by step soldering, solder joints are exposed to a high temperature of approximately 150°C. On the other hand, it is easy to assume that the commercial-off-the-shelf electronic equipment is used in a cold weather region.

Examples of use of solder joints in which the solder joints are exposed to a harsh environment include, in addition to use for commercial-off-the-shelf electronic equipment, use for vehicle-mounted electronic equipment or industrial electronic equipment. Concerning vehicles, car electronics have advanced, and the transition from gasoline vehicles to electric vehicles and hybrid vehicles is underway. According to this, due to expansion of use, a substrate of vehicle-mounted electronic equipment may be disposed in a position to be exposed to a high temperature, such as an engine room. On the other hand, when the engine stops, the substrate is exposed to a temperature as low as -40°C or less in a cold weather region. Further, depending on the use environment, a physical external force such as an impact may be applied to the electronic equipment.

Also, industrial electronic equipment is used in a place where it is difficult for a worker to perform a work. Therefore, as in the case of a substrate of vehicle-mounted electronic equipment, it is assumed that a substrate of industrial electronic equipment is exposed to an environment with extreme temperature changes or an external force is applied to the electronic equipment.

Incidentally, as an alloy for connecting a substrate and electronic components, an Sn-3Ag-0.5Cu solder alloy is widely used. The application range of the solder alloy is expanding, and according to this, as represented by the use for vehicle-mounted equipment, etc., solder alloys are being increasingly required to have high connection reliability so as not to cause rupture or deterioration of solder joints even in long-term use in a harsh environment.

However, when an electronic circuit is exposed to extreme temperature changes as described above, due to a difference in coefficient of thermal expansion between the electronic components and a printed circuit board, stress concentrates on solder joints. In addition, when an external force is applied to the electronic equipment, stress concentrates on solder joints with small sectional areas. Therefore, the use of the conventional Sn-3Ag-0.5Cu solder alloy involves the risk of rupture of solder joints, and a solder alloy that prevents this is demanded.

For example, in Patent Document 1, as a solder alloy that can prevent lift-off when forming a fillet in a through hole of a circuit board, has excellent wet spreadability in a state of molten solder, and shows a low degree of crack growth in a cooling/heating cycle, an alloy composition that may contain Ni, etc., as optional elements in an Sn-Ag-Cu-Sb-In solder alloy is disclosed. In Comparative Example 6 in the document, a solder alloy consisting of Ag: 3.5 mass%, Cu: 0.8 mass%, Sb: 1.0 mass%, In: 6.0 mass%, Ni: 0.07 mass%, with the balance being Sn, is disclosed.

In Patent Document 2, as a solder alloy that forms a small structure of an intermetallic compound and has high crack resistance, and has high durability by preventing voids and Cu leaching and preventing growth of a crack after a cooling/heating cycle, an alloy composition that may contain Sb and In, etc., as optional elements in an Sn-Ag-Bi-Ni-Co-based solder alloy is disclosed. In Example 40 in the document, a solder alloy consisting of Ag: 3.0 mass%, Cu: 0.5 mass%, Sb: 1.5 mass%, In: 4.3 mass%, Ni: 0.05 mass%, Bi: 0.5 mass%, Co: 0.005 mass%, with the balance being Sn is disclosed.

Citation List

Patent Documents

Patent Document 1: Japanese Unexamined Patent Application Publication No. 2019-063830
Patent Document 2: Japanese Unexamined Patent Application Publication No. 2014-037005

Summary of Invention

Technical Problem

However, the solder alloys described in Patent Documents 1 and 2 are designed by mainly focusing on the heat cycle properties as described above. When electronic equipment is exposed to a heat cycle, due to a difference in coefficient of thermal expansion between a substrate and electronic components, stress is applied to solder joints. On the other hand, when vibration is applied to a vehicle-mounted electronic circuit, the way of application of stress is considered to be different from that of stress caused by expansion and contraction of the printed circuit board and electronic components occurring in a heat cycle. Even when various stresses are applied to solder joints in this way due to deterioration of a use environment caused by high functionality and expansion of the use of electronic equipment in recent years, in order to avoid the solder joints from being ruptured, the strength of the solder alloy itself needs to be improved.

In addition, examples of rupture of a solder joint include, in addition to rupture of a solder alloy constituting the solder joint, rupture at a joint interface caused by deterioration of wettability of the solder alloy. Thus, in order to form a solder joint with higher reliability than conventional solder joints, it is necessary to reconsider publicly known alloy compositions.

An object of the present invention is to provide a solder alloy, a solder ball, a solder preform, a solder paste, and a solder j oint, which have excellent wettability and high reliability by prevention of rupture of solder joints.

Solution to Problem

In an Sn-Ag-Cu solder alloy, the inventors examined an alloy composition capable of relaxing various stresses. Conventionally, a solder alloy that greatly changed in volume in a cooling/heating cycle was considered to cause rupture of solder joints due to a difference in coefficient of thermal expansion from a substrate. However, when the volume change is small, applied stress is accumulated as strain energy in the solder alloy and may rather promote the rupture.

First, in order to relax the stress to be applied at the time of heating in a cooling/heating cycle, the inventors intentionally focused on In that causes a volume change of the solder alloy. Depending on a content, In promotes solid-phase transformation between βSn and γSn, and accordingly causes a volume change due to the solid-phase transformation. Then, the inventors examined a solder alloy with an increased content of In as described in Patent Document 1.

However, when the volume change is large, the solder joint ruptures at a joint interface. Therefore, from the viewpoint of wettability of molten solder and refinement of the alloy structure in the solder alloy and the alloy structure at the joint interface, the inventors examined contents of Cu, Sb, and Ni in detail. Further, the inventors focused on the fact that, at the time of a temperature rise of a solder joint in a cooling/heating cycle, when solid-phase transformation from βSn to γSn immediately occurs, the stress is quickly relaxed, and also examined the content of Ag in detail. As a result, the inventors found that a solder alloy with contents of Ag, Cu, Sb, In, and Ni as additive elements concurrently falling within predetermined ranges has excellent wettability, and prevents rupture of solder joints, and completed the present invention.

The present invention obtained from these findings is as follows.

(1) A solder alloy having an alloy composition consisting of, by mass%,

Ag: 1.0 to 3.7%,
Cu: 0.4 to 0.8%,
Sb: 0.50 to 2.90%,
In: 5.00 to 10.00%,
Ni: 0.01 to 0.06%, with the balance being Sn.

(2) The solder alloy according to (1) above, further containing, by mass%, Co: 0.100% or less.
(3) The solder alloy according to (1) or (2) above, further containing, by mass%, Bi: 5.0% or less.
(4) The solder alloy according to any one of (1) to (3) above, further containing, by mass%, at least one of Zr, Fe, Ge, Ga, P, As, Pb, Zn, Mg, Cr, Ti, Mn, Mo, Pt, Pd, Au, Al, and Si: 0.1% or less in total.
(5) The solder alloy according to any one of (1) to (5) above, satisfying the following relations (1) and (2):

$$132 \leq (\text{In/Sb}) \times (\text{Sn/Ag}) \leq 450 \quad \text{Relation (1)}$$

$$251 \leq \mathrm{In}/(\mathrm{Cu} \times \mathrm{Sb} \times \mathrm{Ni}) \leq 699 \qquad \text{Relation (2)}$$

wherein In, Sb, Sn, Ag, Cu, and Ni in the relations (1) and (2) each represent the contents (mass%) thereof in the alloy composition.

(6) A solder joint consisting of the solder alloy according to any one of (1) to (5) above.

(7) A solder preform consisting of the solder alloy according to any one of (1) to (5) above.

(8) A solder paste comprising a solder powder consisting of the solder alloy according to any one of (1) to (5) above.

(9) A solder joint comprising the solder alloy according to any one of (1) to (5) above.

Brief Description of Drawings

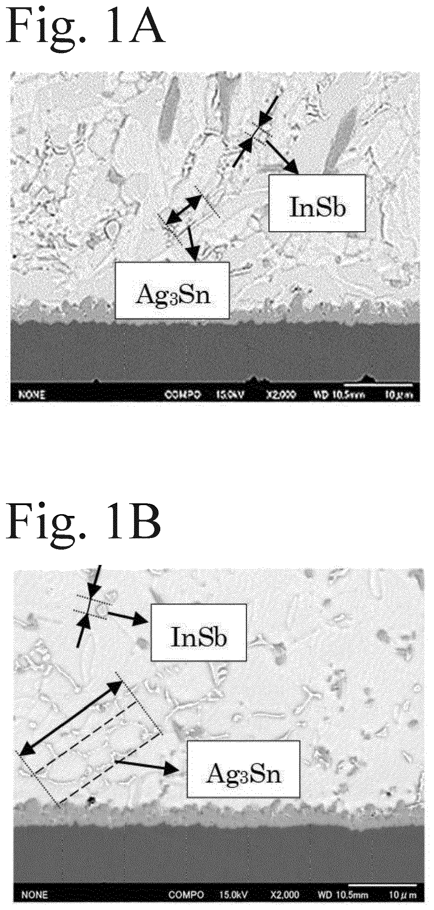

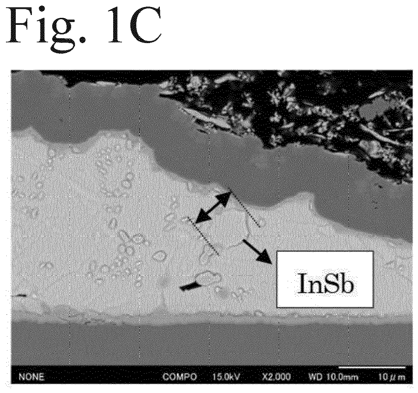

Fig. 1 is sectional SEM photographs of solder alloys, Fig. 1A illustrates that in Example 6, Fig. 1B that in illustrates Comparative Example 3, and Fig. 1C illustrates that in Comparative Example 8.

Description of Embodiments

The present invention is described in more detail below. In the present description, "%" relating to the solder alloy composition refers to "mass%" unless otherwise specified.

1. Solder Alloy

(1) Ag: 1.0 to 3.7%

Ag can quickly relax the strain energy at the time of temperature rise by decreasing a temperature that causes phase transformation from $\beta$Sn to $\gamma$Sn, and prevent rupture of solder joints. In addition, Ag forms a network of $Ag_3Sn$, and can improve the strength of the solder alloy itself. When the Ag content is less than 1.0%, the temperature that causes phase transformation from $\beta$Sn to $\gamma$Sn does not decrease and phase transformation does not occur, and rupture of solder joints cannot be prevented. Further, a fine $Ag_3Sn$ network is not formed, and the strength deteriorates. A lower limit of the Ag content is 1.0% or more, preferably 1.5% or more, and more preferably 2.0% or more. On the other hand, an Ag content of more than 3.7% causes crystallization of a coarse $Ag_3Sn$ primary crystal, and deteriorates the strength. An upper limit of the Ag content is 3.7% or less, preferably 3.0% or less, and more preferably 2.3% or less.

(2) Cu: 0.4 to 0.8%

Cu can improve the wettability of molten solder by suppressing an increase in liquidus-line temperature. When the Cu content is less than 0.4% or more than 0.8%, the liquidus-line temperature increases, the fluidity at a joining temperature deteriorates, and accordingly, the wettability deteriorates. In addition, when the Cu content is more than 0.8%, a compound of Cu and Sn precipitates, and an intermetallic compound formed at a joint interface becomes hard. A lower limit of the Cu content is 0.4% or more, preferably 0.5% or more. An upper limit of the Cu content is 0.8% or less, preferably 0.7% or less, and more preferably 0.6% or less.

(3) Sb: 0.50 to 2.90%

Sb can cause a fine InSb compound to crystallize and improve the strength of the solder alloy itself when Sb is added to the solder alloy with a predetermined content of In. In addition, the solid solubility limit of Sb to Sn changes in an operating temperature range including a room temperature, so that solid solution of Sb into Sn and Sb precipitation are repeated according to temperature changes. Sb forms a supersaturated solid solution in a high-temperature range, so that the solder alloy is improved in bulk strength due to solid solution strengthening. According to this, the liquidus-line temperature decreases, so that the wettability is improved.

When the Sb content is less than 0.50%, the improvement in bulk strength by solid solution strengthening and dispersion and precipitation strengthening cannot be realized. In addition, the InSb compound does not become fine, and the bulk strength is not improved. A lower limit of the Sb content is 0.50% or more, preferably 0.70% or more, and more preferably 1.00% or more. On the other hand, when the Sb content is more than 2.90%, due to crystallization of a coarse InSb compound, the continuousness of dispersion and precipitation strengthening disappears. An upper limit of the Sb content is 2.90% or less, preferably 2.50% or less, and more preferably 2.30% or less.

(4) In: 5.00 to 10.00%

When In reaches a transformation point in response to a temperature change, In causes gradual phase transformation from $\beta$Sn to $\gamma$Sn, and accordingly, the strain energy is relaxed, and a solder joint can be prevented from being ruptured. Although a solder joint was conventionally considered to easily rupture when its volume change was large in a cooling/heating cycle, in the present invention, by intentionally preparing the alloy composition so as to increase the volume change, a solder joint can be more effectively prevented from being ruptured than in the case of conventional solder alloys. When the In content is less than 5.0%, solid-phase transformation of the Sn phase does not occur. A lower limit of the In content is 5.0% or more, preferably 6.00% or more, and more preferably 7.50%. On the other hand, when the In content is more than 10.00%, the liquidus-line temperature excessively decreases, and solid-phase transformation of the Sn phase does not occur. An upper limit of the In content is 10.00% or less, and preferably 9.00% or less.

(5) Ni: 0.01 to 0.06%

Ni can strengthen a joint interface by blocking diffusion of Cu to Sn after soldering, suppressing growth of an intermetallic compound that precipitates at the joint interface, and suppressing coarsening of the intermetallic compound that precipitates at the joint interface. When the Ni content is less than 0.01%, the joint interface cannot be strengthened. A lower limit of the Ni content is 0.01% or more, preferably 0.02% or more, and more preferably 0.03% or more. On the other hand, when the Ni content is more than 0.06%, due to an increase in liquidus-line temperature, the wettability deteriorates. An upper limit of the Ni content is 0.06% or less, preferably 0.05% or less, and more preferably 0.04% or less.

(6) Balance: Sn

The balance of the solder alloy according to the present invention is Sn. In addition to the above-described elements, unavoidable impurity may be contained. Even when unavoidable impurity is contained, it does not affect the above-described effects.

(7) Co: 0.100% or less

Co is an optional element having the effects of suppressing growth of the intermetallic compound and refining the alloy structure. An upper limit of the Co content is preferably 0.100% or less, more preferably 0.050% or less, and further preferably 0.010% or less. Although a lower limit of the Co content is not particularly limited, from the viewpoint of refining the alloy structure, the lower limit is preferably 0.001% or more, more preferably 0.003% or more, further preferably 0.005% or more, still further preferably 0.006% or more, particularly preferably 0.007% or more, and most preferably 0.008% or more.

(8) Bi: 5.0% or less

Bi is an optional element that dissolves in the Sn phase and can improve the strength of the solder alloy. When an appropriate amount of Bi is added, the solder alloy may not embrittle but maintain high strength. An upper limit of the Bi content is preferably 5.0% or less, more preferably 1.0% or less, and further preferably 0.3% or less. Although a lower limit of the Bi content is not particularly limited, from the viewpoint of sufficiently obtaining solid solution strengthening, the lower limit needs to be 0.1% or more.

(9) Other Optional Elements

In addition to the above-described elements, the solder alloy according to the present invention may contain at least one of Zr, Fe, Ge, Ga, P, As, Pb, Zn, Mg, Cr, Ti, Mn, Mo, Pt, Pd, Au, Al, and Si: 0.1% or less in total. Even when 0.1% or less of these elements is contained, a coarse compound does not precipitate, and the above-described effects of the present invention can be exerted. A total content of these elements is preferably 0.1% or less, more preferably 0.09% or less, and further preferably 0.05% or less. A content of each element is preferably 0.0003 to 0.02% although not particularly limited. Among these, like Ni, Fe can strengthen a joint interface by blocking diffusion of Cu to Sn after soldering, suppressing growth of an intermetallic compound that precipitates at the joint interface, and suppressing coarsening of the intermetallic compound that precipitates at the joint interface.

(10) Relations (1) and (2)

$$132 \leq (In/Sb) \times (Sn/Ag) \leq 450 \qquad \text{Relation (1)}$$

$$251 \leq In/(Cu \times Sb \times Ni) \leq 699 \qquad \text{Relation (2)}$$

In, Sb, Sn, Ag, Cu, and Ni in the relations (1) and (2) above each represent the contents (mass%) thereof in the alloy composition.

It is preferable that the solder alloy according to the present invention satisfies the relations (1) and (2). By satisfying both of these relations, the solder alloy itself is improved in strength, and improved in wettability by realization of a proper liquidus-line temperature.

When the solder alloy according to the present invention satisfies the relation (1), $Ag_3Sn$ densely crystallizes and InSb finely crystallizes, and accordingly, the bulk strength can be further synergistically improved. For dense and fine crystallization of each intermetallic compound, it is preferable that constituent elements of each intermetallic compound are contained in a well-balanced manner. In addition, it is presumed that coarsening of the intermetallic compound is suppressed by dispersing the crystallization amount of the intermetallic compound without bias to one side. A lower limit of the relation (1) is preferably 132 or more, more preferably 150 or more, and particularly preferably 180 or more. An upper limit of the relation (1) is preferably 450 or less, more preferably 430 or less, and further preferably 410 or less.

When the solder alloy according to the present invention satisfies the relation (2), the liquidus-line temperature can be adjusted to a more proper range. For this, it is preferable that In whose liquidus-line temperature decreases as its content increases, and Cu, Sb, and Ni whose liquidus-line temperatures rise as their contents increase, are contained so as to maintain their balance. In particular, Cu, Sb, and Ni form an intermetallic compound whose melting point is higher than that of Sn, so that in order to obtain a proper liquidus-line temperature, it is preferable that their contents are comprehensively adjusted as well as the content of In. A lower limit of the relation (2) is preferably 251 or more, more preferably 300 or more, and particularly preferably 345 or more. An upper limit of the relation (2) is preferably 699 or less, more preferably 600 or less, and further preferably 500 or less.

In the solder alloy according to the present invention, for improving the mechanical properties as described above, it is preferable that $Ag_3Sn$ densely crystallizes and InSb finely crystallizes. The denseness and fineness are generally evaluated based on an average crystal grain size. However, the presence of only one coarse compound may cause deterioration of the mechanical properties of the solder alloy. Therefore, in the present invention, by focusing on maximum crystal grain sizes of these compounds, when the maximum crystal grain sizes are small, the alloy can be evaluated to have a dense and fine structure. It is preferable that $Ag_3Sn$ has a grain size optimum for forming a network, and its maximum crystal grain size is preferably 5 to 15 $\mu$m, more preferably 5 to 10 $\mu$m, and may be more than 10 $\mu$m and 15 $\mu$m or less. A maximum crystal grain size of InSb is preferably 7 $\mu$m or less, more preferably 5 $\mu$m or less, and further preferably 1.8 $\mu$m or less.

2. Solder Ball

The solder alloy according to the present invention can be used as a solder ball. A solder ball according to the present invention is used to form bumps of electrodes and a substrate of a semiconductor package such as a BGA (Ball Grid Array). A diameter of the solder ball according to the present invention is preferably within a range of 1 to 1000 $\mu$m. The solder ball can be produced by a general solder ball production method.

3. Solder Preform

A shape of a solder preform according to the present invention is not particularly limited, and can be used in the form of a plate shape, a ring shape, a cylindrical shape, a ribbon shape, a square shape, a disc shape, a washer shape, a chip shape, and a wire shape, etc. The solder preform may internally contain high-melting-point metallic grains (for example, Ni grains and Cu grains, and an alloy powder mainly containing Ni and Cu) that have a melting point higher than that of the solder alloy and are easily wet with molten solder.

4. Solder Paste

The solder alloy according to the present invention can be used as solder paste. The solder paste is obtained by mixing a solder alloy powder with a small amount of flux and processing these in paste form. The solder alloy according to the present invention may be used as solder paste for mounting an electronic component to a printed circuit board by a reflow soldering method. The flux to be used for the solder paste may be either a water-soluble flux or a water-insoluble flux. Typically, a rosin-based flux as a rosin-based water-insoluble flux is used.

5. Solder Joint

The solder joint according to the present invention connects an IC chip and a substrate (interposer) of the IC chip in a semiconductor package, or joins and connects a semiconductor package and a printed circuit board. That is, the solder joint according to the present invention is a connecting portion of an electrode, and can be formed by using general soldering conditions.

The joining method using the solder alloy according to the present invention may be performed in the usual manner by using, for example, step soldering according to a reflow method. A heating temperature may be adjusted as appropriate according to heat resistance of a chip and a liquidus-line temperature of the solder alloy. Other joining conditions can be adjusted as appropriate according to an alloy composition of the solder alloy.

Examples

Solder alloys having the alloy compositions described in Table 1 and Table 2 were prepared, and a liquidus-line temperature of each solder alloy was measured as evaluation 1, denseness of $Ag_3Sn$ was evaluated as evaluation 2, refinement of InSb was evaluated as evaluation 3, solid-phase transformation of the Sn phase was evaluated as evaluation 4, and homogeneous refinement of a joint interface was evaluated as evaluation 5.

- Evaluation 1: Liquidus-Line Temperature

The respective solder alloys described in Table 1 were produced, and their liquidus-line temperatures were measured. The liquidus-line temperatures were measured by a method using DSC similar to the solidus temperature measuring method in accordance with JIS Z 3198-1. A case where the liquidus-line temperature was 200 to 215°C was evaluated as "good," a case where the liquidus-line temperature was more than 215°C was evaluated as "poor," and a case where the liquidus-line temperature was lower than 200°C was also evaluated as "poor."

- Evaluation 2, 3: Denseness of $Ag_3Sn$, refinement of InSb

A solder alloy having the alloy composition described in Table 1 was casted into a predetermined mold, and an obtained solder alloy was molded by resin and ground, a portion where the solder alloy was ground by about half was imaged at a magnification of 1000 with an FE-SEM. Denseness of $Ag_3Sn$ and refinement of InSb were evaluated by cross-section observation and mapping composition analysis using EDS. Each compound was identified by mapping composition analysis, and a largest crystal grain was visually selected. For this crystal grain, two parallel tangent lines were drawn so that a distance between them became largest, and this distance was defined as a maximum crystal grain size. A case where the maximum crystal grain size of $Ag_3Sn$ was 5 $\mu$m or more and 10 $\mu$m or less was evaluated as "Excellent," a case where the maximum crystal grain size was more than 10 $\mu$m and 15 $\mu$m or less was evaluated as "good," and a case where the maximum crystal grain size was less than 5 $\mu$m and a case where the maximum crystal grain size was more than 15 $\mu$m were evaluated as "poor." A case where the maximum crystal grain size of InSb was 1.8 $\mu$m or less was evaluated as "Excellent," a case where the maximum crystal grain size was more than 1.8 $\mu$m and 7 $\mu$m or less was evaluated as "good," and a case where the maximum crystal grain size was more than 7 $\mu$m was evaluated as "poor."

- Evaluation 4: Solid-phase Transformation of Sn Phase

A solder ball with $\phi$0.6 mm was prepared from each solder alloy described in Table 1. This solder ball was exposed to a heat-cycle environment with temperature changes between -40°C and 125°C for 200 cycles by using a constant-temperature bath, and evaluation was made in an environment where solid-phase transformation of the Sn phase occurs. After that, the sphericity of the solder ball taken out of the constant-temperature bath was evaluated. The sphericity was measured with a CNC image measurement system. The measurement system was Ultra Quick Vision, ULTRA QV350-PRO made by Mitutoyo Corporation. A case where the sphericity was less than 0.95 was evaluated as "Excellent," a case where the sphericity was 0.95 or more and less than 0.99 was evaluated as "good," and a case where the sphericity was 0.99 or more was evaluated as "poor."

- Evaluation 5: Homogeneous Refinement of Joint Interface

After a solder ball with $\phi$0.6 mm prepared from each solder alloy described in Table 1 was mounted onto a Cu pad, reflow soldering was performed at 245°C, and accordingly, a solder bump was formed. By measuring a thickness of an intermetallic compound (IMC) from a sectional SEM photograph imaging a section of a joint interface between the solder bump and the Cu pad, homogeneous refinement of the joint interface was evaluated. When the joint interface is homogeneously refined, the intermetallic compound layer becomes thin, so that in evaluation 5, homogeneous refinement was evaluated based on a thickness of the intermetallic compound. The sectional SEM photograph was analyzed by image analysis software (Scandium made by SEIKA CORPORATION), and a thickness of the intermetallic compound layer was measured. A case where the thickness of the intermetallic compound was 1.5 $\mu$m or less was evaluated as "Excellent," a case where the thickness was more than 1.5 $\mu$m and 2.5 $\mu$m or less was evaluated as "good," and a case where the thickness was more than 2.5 $\mu$m was evaluated as "poor."

Evaluation results are shown in Tables 1 to 3.

Table 1

| | Sn | Ag | Cu | Sb | In | Ni | Bi | Co | Other | Relation (1) (In/Sb)×(Sn/Ag) | Relation (2) In/ (Cu×Sb×Ni) |
|---|---|---|---|---|---|---|---|---|---|---|---|
| Ex. 1 | Bal. | 1.0 | 0.5 | 1.00 | 9.00 | 0.04 | - | - | - | 796 | 450 |
| Ex. 2 | Bal. | 2.3 | 0.7 | 1.00 | 6.00 | 0.04 | - | - | - | 235 | 214 |
| Ex. 3 | Bal. | 3.0 | 0.5 | 1.00 | 9.00 | 0.04 | - | - | - | 259 | 450 |
| Ex. 4 | Bal. | 3.7 | 0.5 | 1.00 | 9.00 | 0.04 | - | - | - | 209 | 450 |
| Ex. 5 | Bal. | 2.3 | 0.4 | 1.00 | 6.00 | 0.04 | - | - | - | 235 | 375 |
| Ex. 6 | Bal. | 2.0 | 0.5 | 1.00 | 9.00 | 0.04 | - | - | - | 394 | 450 |
| Ex. 7 | Bal. | 2.0 | 0.6 | 1.00 | 9.00 | 0.04 | - | - | - | 393 | 375 |
| Ex. 8 | Bal. | 2.0 | 0.8 | 1.00 | 9.00 | 0.04 | - | - | - | 392 | 281 |
| Ex. 9 | Bal. | 2.0 | 0.5 | 0.50 | 9.00 | 0.04 | - | - | - | 792 | 900 |
| Ex. 10 | Bal. | 2.0 | 0.5 | 0.70 | 9.00 | 0.04 | - | - | - | 564 | 643 |
| Ex. 11 | Bal. | 2.0 | 0.5 | 2.00 | 9.00 | 0.04 | - | - | - | 195 | 225 |
| Ex. 12 | Bal. | 2.0 | 0.5 | 2.90 | 9.00 | 0.04 | - | - | - | 133 | 155 |
| Ex. 13 | Bal. | 2.0 | 0.5 | 1.00 | 5.00 | 0.04 | - | - | - | 229 | 250 |
| Ex. 14 | Bal. | 2.0 | 0.5 | 1.00 | 7.50 | 0.04 | - | - | - | 334 | 375 |
| Ex. 15 | Bal. | 2.0 | 0.5 | 1.00 | 10.00 | 0.04 | - | - | - | 432 | 500 |
| Ex. 16 | Bal. | 2.0 | 0.5 | 1.00 | 9.00 | 0.01 | - | - | - | 394 | 1800 |
| Ex. 17 | Bal. | 2.0 | 0.5 | 1.00 | 9.00 | 0.02 | - | - | - | 394 | 900 |
| Ex. 18 | Bal. | 2.0 | 0.5 | 1.00 | 9.00 | 0.03 | - | - | - | 394 | 600 |

(continued)

| | Sn | Ag | Cu | Sb | In | Ni | Bi | Co | Other | Relation (1) (In/Sb)×(Sn/Ag) | Relation (2) In/ (Cu×Sb×Ni) |
|---|---|---|---|---|---|---|---|---|---|---|---|
| Ex. 19 | Bal. | 2.0 | 0.5 | 1.00 | 9.00 | 0.05 | - | - | - | 394 | 360 |
| Ex. 20 | Bal. | 2.0 | 0.5 | 1.00 | 9.00 | 0.06 | - | - | - | 393 | 300 |
| Ex. 21 | Bal. | 2.0 | 0.5 | 1.00 | 9.00 | 0.04 | 0.1 | - | - | 393 | 450 |
| Ex. 22 | Bal. | 2.0 | 0.5 | 1.00 | 9.00 | 0.04 | 1.0 | - | - | 389 | 450 |
| Ex. 23 | Bal. | 2.0 | 0.5 | 1.00 | 9.00 | 0.04 | 5.0 | - | - | 371 | 450 |
| Ex. 24 | Bal. | 2.0 | 0.5 | 1.00 | 9.00 | 0.04 | - | 0.010 | - | 394 | 450 |
| Ex. 25 | Bal. | 2.0 | 0.5 | 1.00 | 9.00 | 0.04 | - | 0.100 | - | 393 | 450 |

Table 1 continued

| | Evaluation 1: Liquidus-line temperature | Evaluation 2: Denseness of Ag$_3$Sn | Evaluation 3: Refinement of InSb | Evaluation 4: Solid-phase transformation of Sn phase | Evaluation 5: Homogeneous refinement of j joint interface | Comprehensive evaluation |
|---|---|---|---|---|---|---|
| Ex. 1 | good | good | excellent | good | excellent | good |
| Ex. 2 | good | good | excellent | good | excellent | good |
| Ex. 3 | good | excellent | excellent | excellent | excellent | excellent |
| Ex. 4 | good | excellent | excellent | excellent | excellent | excellent |
| Ex. 5 | good | excellent | excellent | excellent | excellent | excellent |
| Ex. 6 | good | excellent | excellent | excellent | excellent | excellent |
| Ex. 7 | good | excellent | excellent | excellent | excellent | excellent |
| Ex. 8 | good | excellent | excellent | excellent | excellent | excellent |
| Ex. 9 | good | excellent | good | excellent | excellent | good |
| Ex. 10 | good | excellent | good | excellent | excellent | good |
| Ex. 11 | good | excellent | good | excellent | excellent | good |

(continued)

| | Evaluation 1: Liquidus-line temperature | Evaluation 2: Denseness of Ag$_3$Sn | Evaluation 3: Refinement of InSb | Evaluation 4: Solid-phase transformation of Sn phase | Evaluation 5: Homogeneous refinement of j joint interface | Comprehensive evaluation |
|---|---|---|---|---|---|---|
| Ex. 12 | good | excellent | good | excellent | excellent | good |
| Ex. 13 | good | excellent | good | excellent | excellent | good |
| Ex. 14 | good | excellent | excellent | excellent | excellent | excellent |
| Ex. 15 | good | excellent | excellent | excellent | excellent | excellent |
| Ex. 16 | good | excellent | excellent | excellent | good | good |
| Ex. 17 | good | excellent | excellent | excellent | good | good |
| Ex. 18 | good | excellent | excellent | excellent | excellent | excellent |
| Ex. 19 | good | excellent | excellent | excellent | excellent | excellent |
| Ex. 20 | good | excellent | excellent | excellent | excellent | excellent |
| Ex. 21 | good | excellent | excellent | excellent | excellent | excellent |
| Ex. 22 | good | excellent | excellent | excellent | excellent | excellent |
| Ex. 23 | good | excellent | excellent | excellent | excellent | excellent |
| Ex. 24 | good | excellent | excellent | excellent | excellent | excellent |
| Ex. 25 | good | excellent | excellent | excellent | excellent | excellent |

Table 2

| | Sn | Ag | Cu | Sb | In | Ni | Bi | Co | Other | Relation (1) (In/Sb)×(Sn/Ag) | Relation (2) In/(Cu×Sb×Ni) |
|---|---|---|---|---|---|---|---|---|---|---|---|
| Ex. 26 | Bal. | 2.0 | 0.5 | 1.00 | 9.00 | 0.04 | | 0.010 | Fe: 0.015 | 393 | 450 |
| Ex. 27 | Bal. | 2.0 | 0.5 | 1.00 | 9.00 | 0.04 | | 0.008 | Fe: 0.015 | 393 | 450 |
| Ex. 28 | Bal. | 2.0 | 0.5 | 1.00 | 9.00 | 0.04 | | 0.001 | Fe: 0.015 | 394 | 450 |
| Ex. 29 | Bal. | 2.0 | 0.5 | 1.00 | 9.00 | 0.04 | | 0.008 | Fe: 0.010 | 393 | 450 |

(continued)

| | Sn | Ag | Cu | Sb | In | Ni | Bi | Co | Other | Relation (1) (In/Sb) ×(Sn/Ag) | Relation (2) In/ (Cu×Sb×Ni) |
|---|---|---|---|---|---|---|---|---|---|---|---|
| Ex. 30 | Bal. | 2.0 | 0.5 | 1.00 | 9.00 | 0.04 | - | - | Zr: 0.01 | 394 | 450 |
| Ex. 31 | Bal. | 2.0 | 0.5 | 1.00 | 9.00 | 0.04 | - | - | Fe: 0.01 | 394 | 450 |
| Ex. 32 | Bal. | 2.0 | 0.5 | 1.00 | 9.00 | 0.04 | - | - | Ge: 0.01 | 394 | 450 |
| Ex. 33 | Bal. | 2.0 | 0.5 | 1.00 | 9.00 | 0.04 | - | - | Ga: 0.01 | 394 | 450 |
| Ex. 34 | Bal. | 2.0 | 0.5 | 1.00 | 9.00 | 0.04 | - | - | P: 0.01 | 394 | 450 |
| Ex. 35 | Bal. | 2.0 | 0.5 | 1.00 | 9.00 | 0.04 | - | - | As: 0.01 | 394 | 450 |
| Ex. 36 | Bal. | 2.0 | 0.5 | 1.00 | 9.00 | 0.04 | - | - | Pb: 0.01 | 394 | 450 |
| Ex. 37 | Bal. | 2.0 | 0.5 | 1.00 | 9.00 | 0.04 | - | - | Zn: 0.01 | 394 | 450 |
| Ex. 38 | Bal. | 2.0 | 0.5 | 1.00 | 9.00 | 0.04 | - | - | Mg: 0.01 | 394 | 450 |
| Ex. 39 | Bal. | 2.0 | 0.5 | 1.00 | 9.00 | 0.04 | - | - | Cr: 0.01 | 394 | 450 |
| Ex. 40 | Bal. | 2.0 | 0.5 | 1.00 | 9.00 | 0.04 | - | - | Ti: 0.01 | 394 | 450 |
| Ex. 41 | Bal. | 2.0 | 0.5 | 1.00 | 9.00 | 0.04 | - | - | Mn: 0.01 | 394 | 450 |
| Ex. 42 | Bal. | 2.0 | 0.5 | 1.00 | 9.00 | 0.04 | - | - | Mo: 0.01 | 394 | 450 |
| Ex. 43 | Bal. | 2.0 | 0.5 | 1.00 | 9.00 | 0.04 | - | - | Pt: 0.01 | 394 | 450 |
| Ex. 44 | Bal. | 2.0 | 0.5 | 1.00 | 9.00 | 0.04 | - | - | Pd: 0.01 | 394 | 450 |
| Ex. 45 | Bal. | 2.0 | 0.5 | 1.00 | 9.00 | 0.04 | - | - | Au: 0.01 | 394 | 450 |
| Ex. 46 | Bal. | 2.0 | 0.5 | 1.00 | 9.00 | 0.04 | - | - | Alti.01 | 394 | 450 |
| Ex. 47 | Bal. | 2.0 | 0.5 | 1.00 | 9.00 | 0.04 | - | - | Si: 0.01 | 394 | 450 |

Table 2 continued

| | Evaluation 1: Liquidus-line temperature | Evaluation 2: Denseness of Ag$_3$Sn | Evaluation 3: Refinement of InSb | Evaluation 4: Solid-phase transformation of Sn phase | Evaluation 5: Homogeneous refinement of joint interface | Comprehensive evaluation |
|---|---|---|---|---|---|---|
| Ex. 26 | good | excellent | excellent | excellent | excellent | excellent |
| Ex. 27 | good | excellent | excellent | excellent | excellent | excellent |
| Ex. 28 | good | excellent | excellent | excellent | excellent | excellent |
| Ex. 29 | good | excellent | excellent | excellent | excellent | excellent |
| Ex. 30 | good | excellent | excellent | excellent | excellent | excellent |
| Ex. 31 | good | excellent | excellent | excellent | excellent | excellent |
| Ex. 32 | good | excellent | excellent | excellent | excellent | excellent |
| Ex. 33 | good | excellent | excellent | excellent | excellent | excellent |
| Ex. 34 | good | excellent | excellent | excellent | excellent | excellent |
| Ex. 35 | good | excellent | excellent | excellent | excellent | excellent |
| Ex. 36 | good | excellent | excellent | excellent | excellent | excellent |
| Ex. 37 | good | excellent | excellent | excellent | excellent | excellent |
| Ex. 38 | good | excellent | excellent | excellent | excellent | excellent |
| Ex. 39 | good | excellent | excellent | excellent | excellent | excellent |
| Ex. 40 | good | excellent | excellent | excellent | excellent | excellent |
| Ex. 41 | good | excellent | excellent | excellent | excellent | excellent |
| Ex. 42 | good | excellent | excellent | excellent | excellent | excellent |
| Ex. 43 | good | excellent | excellent | excellent | excellent | excellent |
| Ex. 44 | good | excellent | excellent | excellent | excellent | excellent |
| Ex. 45 | good | excellent | excellent | excellent | excellent | excellent |
| Ex. 46 | good | excellent | excellent | excellent | excellent | excellent |

(continued)

|  | Evaluation 1: Liquidus-line temperature | Evaluation 2: Denseness of Ag$_3$Sn | Evaluation 3: Refinement of InSb | Evaluation 4: Solid-phase transformation of Sn phase | Evaluation 5: Homogeneous refinement of joint interface | Comprehensive evaluation |
|---|---|---|---|---|---|---|
| Ex. 47 | good | excellent | excellent | excellent | excellent | excellent |

Table 3

| | Sn | Ag | Cu | Sb | In | Ni | Bi | Co | Other | Relation (1) (In/Sb)×(Sn/Ag) | Relation (2) In/(Cu×Sb×Ni) |
|---|---|---|---|---|---|---|---|---|---|---|---|
| Ex.48 | Bal. | 2.0 | 0.5 | 1.00 | 9.00 | 0.04 | 1.0 | 0.010 | Zr:0.005. Fe:0.005, Ge:0.005, Ga:0.005, P:0.005, As:0.005, Pb:0.005, Zn:0.005, Mg:0.005, Cr:0.005, Ti:0.005, Mn:0.005, Mo:0.005, Pt:0.005, Pd:0.005, Au:0.005, A1:0.005, Si:0.005 | 389 | 450 |
| Comp. Ex.1 | Bal. | 0.5 | 0.5 | 2.00 | – | 0.04 | 3.0 | - | - | - | - |
| Comp. Ex.2 | Bal. | 0.9 | 0.5 | 1.00 | 9.00 | 0.04 | - | - | - | 886 | 450 |
| Comp. Ex.3 | Bal. | 3.8 | 0.5 | 1.50 | 6.00 | 0.05 | 1.0 | 0.005 | - | 92 | 160 |
| Comp. Ex.4 | Bal. | 2.0 | 0.3 | 1.00 | 9.00 | 0.04 | - | - | - | 394 | 750 |
| Comp. Ex.5 | Bal. | 2.0 | 0.9 | 1.00 | 9.00 | 0.04 | - | - | - | 392 | 250 |
| Comp. Ex.6 | Bal. | 1.0 | 0.9 | 1.25 | 5.70 | – | 1.5 | - | - | 409 | - |
| Comp. Ex.7 | Bal. | 3.5 | 0.5 | 0.40 | 7.00 | 0.05 | 2.5 | 0.005 | - | 430 | 700 |
| Comp. Ex.8 | Bal. | 3.0 | 0.7 | 3.00 | 6.00 | 0.03 | 3.2 | 0.008 | - | 56 | 95 |
| Comp. Ex.9 | Bal. | 3.0 | 0.5 | 1.50 | 4.30 | 0.05 | 0.5 | 0.005 | - | 86 | 115 |

(continued)

| | Sn | Ag | Cu | Sb | In | Ni | Bi | Co | Other | Relation (1) (In/Sb) × (Sn/Ag) | Relation (2) In/ (Cu×Sb×Ni) |
|---|---|---|---|---|---|---|---|---|---|---|---|
| Comp. Ex.10 | Bal. | 2.0 | 0.5 | 1.00 | <u>10.50</u> | 0.04 | - | - | - | 451 | 525 |
| Comp. Ex.11 | Bal. | 3.5 | 0.5 | <u>-</u> | <u>11.00</u> | 0.05 | - | 0.005 | - | - | - |
| Comp. Ex.12 | Bal. | 3.5 | 0.5 | <u>-</u> | 7.00 | <u>0.001</u> | 2.5 | 0.005 | - | - | - |
| Comp. Ex.13 | Bal. | 2.0 | 0.5 | 1.00 | 9.00 | <u>0.005</u> | 1.0 | - | - | 389 | 3600 |
| Comp. Ex.14 | Bal. | 3.5 | 0.8 | 1.00 | 6.00 | <u>0.07</u> | - | - | - | 152 | 107 |
| * The underline indicates that it does not fall within the scope of the present invention. | | | | | | | | | | | |

Table 3 continued

| | Evaluation 1: Liquidus-line temperature | Evaluation 2: Denseness of Ag$_3$Sn | Evaluation 3: Refinement of InSb | Evaluation 4: Solid-phase transformation of Sn phase | Evaluation 5: Homogeneous refinement of joint interface | Comprehensive evaluation |
|---|---|---|---|---|---|---|
| Ex.48 | good | excellent | excellent | excellent | excellent | excellent |
| Comp. Ex.1 | good | poor | - | poor | good | poor |
| Comp. Ex.2 | good | poor | excellent | good | good | poor |
| Comp. Ex.3 | good | poor | good | good | good | poor |
| Comp. Ex.4 | poor | good | excellent | good | good | poor |
| Comp. Ex.5 | poor | good | excellent | good | good | poor |
| Comp. Ex.6 | poor | good | good | good | poor | poor |
| Comp. Ex.7 | good | good | poor | good | good | poor |
| Comp. Ex.8 | good | good | poor | good | good | poor |
| Comp. Ex.9 | good | good | good | poor | good | poor |
| Comp. Ex.10 | poor | good | good | poor | good | poor |
| Comp. Ex.11 | poor | good | - | poor | good | poor |

(continued)

|  | Evaluation 1: Liquidus-line temperature | Evaluation 2: Denseness of Ag$_3$Sn | Evaluation 3: Refinement of InSb | Evaluation 4: Solid-phase transformation of Sn phase | Evaluation 5: Homogeneous refinement of joint interface | Comprehensive evaluation |
|---|---|---|---|---|---|---|
| Comp. Ex.12 | good | good | - | good | poor | poor |
| Comp. Ex.13 | good | good | excellent | good | poor | poor |
| Comp. Ex.14 | poor | good | good | good | good | poor |

As is clear from Tables 1 to 3, it was found that constituent elements of Examples 1 to 48 were all proper, and their liquidus-line temperatures were within a predetermined range. In addition, Ag$_3$Sn was dense and InSb was fine, solid-phase transformation from βSn to γSn was observed, and the structure at the joint interface was homogeneous and fine. In particular, in Examples 3 to 8, 14, 15, and 18 to 48 satisfying the relations (1) and (2), it was confirmed that excellent results were achieved in all evaluations.

On the other hand, in Comparative Example 1, the Ag content was low and In was not contained, so that Ag$_3$Sn did not become dense to such an extent that the bulk strength was improved, and solid-phase transformation of the Sn phase could not be observed.

In Comparative Examples 2 and 3, the Ag content was not proper, so that Ag$_3$Sn did not become dense to such an extent that the bulk strength was improved.

In Comparative Examples 4 to 6, the Cu content was not proper, so that a liquidus-line temperature that exhibits excellent wettability was not realized.

In Comparative Examples 7 and 8, the Sb content was not proper, so that InSb was not refined to such an extent that the bulk strength was improved.

In Comparative Examples 9 to 11, since the In content was not proper, solid-phase transformation of the Sn phase could not be observed. In addition, in Comparative Example 11, Sb was not contained, so that an InSb compound was not precipitated.

In Comparative Examples 12 and 13, due to a low content of Ni, homogeneous refinement of a joint interface could not be observed. In Comparative Example 12, Sb was not contained, so that an InSb compound was not precipitated.

In Comparative Example 14, due to a large content of Ni, a liquidus-line temperature that exhibits excellent wettability could not be realized.

These results will be described by using the drawings. Fig. 1 is sectional SEM photographs of solder alloys, Fig. 1A illustrates that in Example 6, Fig. 1B illustrates that in Comparative Example 3, and Fig. 1C illustrates that in Comparative Example 8. Concerning Ag$_3$Sn described in Fig. 1B, a crystal grain size of a portion circled by a dashed line was measured. As is clear from Fig. 1, it was found that Ag$_3$Sn was 10 μm or less and densely crystallized, and InSb finely crystallized in Example 6. It was also found that an intermetallic compound that precipitated at a joint interface was homogeneous and refined, and was accordingly thin. On the other hand, Ag$_3$Sn was found to be coarse in Comparative Example 3. In addition, InSb was found to be coarse in Comparative Example 8.

**Claims**

1. A solder alloy having an alloy composition consisting of, by mass%,

    Ag: 1.0 to 3.7%,
    Cu: 0.4 to 0.8%,
    Sb: 0.50 to 2.90%,
    In: 5.00 to 10.00%,
    Ni: 0.01 to 0.06%, with the balance being Sn.

2. The solder alloy according to claim 1, further containing, by mass%, Co: 0.100% or less.

3. The solder alloy according to claim 1 or 2, further containing, by mass%, Bi: 1.0% or less.

4. The solder alloy according to claim 1 or 2, further containing, by mass%, at least one of Zr, Fe, Ge, Ga, P, As, Pb, Zn, Mg, Cr, Ti, Mn, Mo, Pt, Pd, Au, Al, and Si: 0.1% or less in total.

5. The solder alloy according to claim 1 or 2, further containing, by mass%, Bi: 5.0% or less, and at least one of Zr, Ge, Ga, As, Pb, Mg, Cr, Ti, Mn, Mo, Pt, Pd, and Si: 0.1% or less in total.

6. The solder alloy according to any one of claims 1 to 5,
wherein the alloy composition satisfies the following relations (1) and (2):

$$132 \leq (In/Sb) \times (Sn/Ag) \leq 450 \quad \text{Relation (1)}$$

$$251 \leq In/(Cu \times Sb \times Ni) \leq 699 \quad \text{Relation (2)}$$

wherein In, Sb, Sn, Ag, Cu, and Ni in the relations (1) and (2) each represent the contents (mass%) thereof in the alloy composition.

7. A solder ball consisting of the solder alloy according to any one of claims 1 to 6.

8. A solder preform consisting of the solder alloy according to any one of claims 1 to 6.

9. A solder paste comprising a solder powder consisting of the solder alloy according to any one of claims 1 to 6.

10. A solder joint comprising the solder alloy according to any one of claims 1 to 6.

# Fig. 1A

# Fig. 1B

# Fig. 1C

## INTERNATIONAL SEARCH REPORT

| International application No. |
|---|
| **PCT/JP2022/036552** |

**A. CLASSIFICATION OF SUBJECT MATTER**

**B23K 35/26**(2006.01)i; **B23K 35/22**(2006.01)i; **C22C 13/00**(2006.01)i
FI: B23K35/26 310A; C22C13/00; B23K35/22 310A

According to International Patent Classification (IPC) or to both national classification and IPC

**B. FIELDS SEARCHED**

Minimum documentation searched (classification system followed by classification symbols)

B23K35/26; B23K35/22; C22C13/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/198496 A1 (HARIMA CHEMICALS, INCORPORATED) 30 December 2015 (2015-12-30) | 1-10 |
| A | WO 2021/043437 A1 (ALPPHA ASSEMBLY SOLUTIONS INC.) 11 March 2021 (2021-03-11) | 1-10 |
| A | CN 108994480 A (YUNNAN TIN MATERIAL CO., LTD.) 14 December 2018 (2018-12-14) | 1-10 |
| A | JP 2018-122324 A (TAMURA SEISAKUSHO KK) 09 August 2018 (2018-08-09) | 1-10 |
| A | CN 103341699 A (ZHEJIANG ASIA GENERAL SOLDERING & BRAZING MATERIAL CO., LTD.) 09 October 2013 (2013-10-09) | 1-10 |
| A | JP 2015-20182 A (HARIMA CHEMICALS, INCORPORATED) 02 February 2015 (2015-02-02) | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **24 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| WO | 2015/198496 | A1 | 30 December 2015 | US | 2016/0271737 | A1 | |
| | | | | US | 2016/0288271 | A1 | |
| | | | | WO | 2015/198497 | A1 | |
| | | | | EP | 2979807 | A1 | |
| | | | | EP | 3093098 | A1 | |
| | | | | CA | 2892424 | A1 | |
| | | | | CN | 105431253 | A | |
| | | | | KR | 10-1551613 | B1 | |
| | | | | KR | 10-1551614 | B1 | |
| | | | | CA | 2892420 | A1 | |
| | | | | CN | 105377503 | A | |
| | | | | TW | 201600216 | A | |
| | | | | TW | 201600610 | A | |
| | | | | ES | 2710219 | T3 | |
| | | | | MY | 162428 | A | |
| | | | | MY | 162879 | A | |
| WO | 2021/043437 | A1 | 11 March 2021 | EP | 4025378 | A1 | |
| | | | | CN | 114340835 | A | |
| | | | | KR | 10-2022-0048483 | A | |
| | | | | CA | 3147980 | A1 | |
| | | | | BR | 112022003319 | A2 | |
| | | | | TW | 202111134 | A | |
| | | | | TW | 202229569 | A | |
| | | | | US | 2022/0324063 | A1 | |
| CN | 108994480 | A | 14 December 2018 | (Family: none) | | | |
| JP | 2018-122324 | A | 09 August 2018 | US | 2018/0029169 | A1 | |
| | | | | WO | 2017/164194 | A1 | |
| | | | | EP | 3321025 | A1 | |
| | | | | CN | 107427969 | A | |
| | | | | KR | 10-2018-0008883 | A | |
| | | | | KR | 10-2018-0015711 | A | |
| | | | | CN | 108500499 | A | |
| | | | | MX | 2018011176 | A | |
| | | | | BR | 112018068596 | A2 | |
| | | | | HU | E052698 | T2 | |
| | | | | ES | 2840124 | T3 | |
| | | | | PH | 12018500431 | A1 | |
| CN | 103341699 | A | 09 October 2013 | (Family: none) | | | |
| JP | 2015-20182 | A | 02 February 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019063830 A

- JP 2014037005 A